# EUROPÄISCHE PATENTSCHRIFT

(11) **EP 3 020 873 B1**
(45) Veröffentlichungstag und Bekanntmachung des Hinweises auf die Patenterteilung: **10.01.2018**
(21) Anmeldenummer: 15193322.3
(22) Anmeldetag: 06.11.2015
(51) Int. Cl.: E02F 9/16, B60R 21/11

(54) **KABINENSCHUTZAUFBAU FÜR EINE FÜHRERKABINE EINER ARBEITSMASCHINE**
CABIN PROTECTION STRUCTURE FOR AN OPERATOR'S CAB OF A WORKING MACHINE
STRUCTURE DE PROTECTION D'UNE CABINE DE CONDUCTEUR D'UNE MACHINE-OUTIL

(30) Priorität: 12.11.2014 DE 102014116541
(43) Veröffentlichungstag der Anmeldung: 18.05.2016
(73) Patentinhaber: Echle Hartstahl GmbH, 77709 Wolfach (DE)
(72) Erfinder: Echle, Lothar, 77709 Oberwolfach (DE)
(74) Vertreter: Patentanwälte und Rechtsanwalt Weiß, Arat & Partner mbB

(56) Entgegenhaltungen:
- EP-A2- 1 228 950
- DE-U1- 9 407 552

## Beschreibung

### Technisches Gebiet

Die Erfindung betrifft einen Kabinenschutzaufbau für eine Führerkabine einer Arbeitsmaschine nach dem Oberbegriff des Anspruchs 1, eine Nachrüstung eines Frontscheibenschutzes bzw. Dachschutzes für eine Führerkabine nach den Ansprüchen 8 bzw. 9 und eine Verwendung eines Sicherheitsglases nach dem Anspruch 10.

### Stand der Technik

Aus dem Stand der Technik wird in diesem Zusammenhang auf die DE 94 07 552 U1 hingewiesen, welche einen Kabinenaufsatz für den Fahrerstand eines Arbeitsfahrzeuges nach dem Oberbegriff von Anspruch 1 aufzeigt, wobei die genutzten Scheiben aus Sicherheitsglas oder Kunststoff gebildet sein können. Weiter wird auf die EP 1 228 950 A2 hingewiesen, welche ebenfalls einen Kabinenaufbau unter Nutzung von Sicherheitsglas offenbart.

Führerkabinen von Arbeitsmaschinen, wie bspw. Baumaschinen, Landwirtschaftsmaschinen, Forstmaschinen oder Sprengstoffräummaschinen weisen zum Schutz vor herabfallenden Gegenständen einen Kabinenschutz auf. Dieser Kabinenschutz, der auch unter dem Begriff "FOPS" (Falling Object Protection Structure) bekannt ist, ist im Stand der Technik meist als Gitterkonstruktion ausgebildet, die dazu geeignet ist, herabfallende Teile daran zu hindern, dass sie in die Kabine eindringen und den Fahrzeugführer verletzen. Nachteilig an der Gitterkonstruktion für den Kabinenschutzaufbau ist, dass hierdurch die Sicht des Maschinen- bzw. Fahrzeugführers eingeschränkt wird.

Aus der EP 2 639 361 A1 ist ein bspw. Kabinenschutz als Gitterkonstruktion bekannt, bei dem ein Frontschutzgitter des Kabinenschutz zumindest teilweise in das Kabinenschutzdach eingeschoben werden kann. Dadurch kann die Sicht des Maschinenführers besonders bei Arbeiten, bei denen kein Kabinenschutz vorgeschrieben ist, verbessert werden. Nachteilig ist jedoch auch hier, dass bei Abbucharbeiten bei denen ein Kabinenschutz vorgeschrieben ist, die Sicht des Maschinenführers ebenfalls eingeschränkt wird.

In weiteren Ausführungsbeispielen, bspw. im Bereich der Sprengstoffräummaschinen, kommt auch schweres Panzerglas zum Einsatz, dass jedoch ein sehr hohes Gewicht aufweist.

### Aufgabe der Erfindung

Aufgabe der Erfindung ist es, ein Kabinenschutzaufbau für Arbeitsmaschinen zur Verfügung zu stellen, der dem Fahrzeug bzw. Maschinenführer eine bessere Sicht im Vergleich zu Systemen aus dem Stand der Technik ermöglicht.

Weiterhin ist es Aufgabe der Erfindung einen Kabinenschutzaufbau zur Verfügung zu stellen, der eine hohe Wartungsfreundlichkeit aufweist und zudem möglichst ein geringeres Gewicht im Vergleich zu Systemen aus dem Stand der Technik. Auch ist es Aufgabe der Erfindung, eine Nachrüstung für einen Kabinenschutzaufbau für Führerkabinen zur Verfügung zu stellen. Zudem soll es Aufgabe der Erfindung sein, ein Frontscheibenschutz oder Dachschutz für eine Führerkabine zur Verfügung zu stellen, die die dortige normale Verglasung der Führerkabine ersetzt und dabei trotzdem die Anforderungen an ein FOPS-System erfüllt.

### Lösung der Aufgabe

Zur Lösung der Aufgabe führen die Merkmale nach Anspruch 1.

Die Erfindung umfasst einen Kabinenschutzaufbau für eine Führerkabine einer Arbeitsmaschine einen Dachschutz und einen Frontscheibenschutz. Weiterhin umfassen der Frontscheibenschutz und der Dachschutz ein Sicherheitsglas. Bei den Arbeitsmaschinen, die einen solchen Kabinenschutzaufbau (FOPS - Falling Object Protection Structure) benötigen, handelt es sich bspw. um Baumaschinen, Abbruchmaschinen, Landwirtschaftsmaschinen, Forstmaschinen oder Sprengstoffräummaschinen.

Bei dem Sicherheitsglas handelt es sich um ein Glas, das aus Polycarbonat hergestellt wird und mit einer Siliziumoxidschicht beschichtet ist. Das Sicherheitsglas weist vorzugsweise eine Dicke im Bereich zwischen 4 mm und 20 mm auf. Der Frontscheibenschutz des Kabinenschutzglases weist zur Aufnahme des Sicherheitsglases einen ersten Halterahmen auf. Der erste Halterahmen des Frontscheibenschutzes besteht in einem Ausführungsbeispiel aus einem ersten Grundkörper und zumindest einem ersten Halteelement. In einem solchen Ausführungsbeispiel ist das erste Grundelement des ersten Halterahmens zur Aufnahme des Sicherheitsglases geeignet. Mit Hilfe des ersten Halteelements sowie mit Befestigungselementen wird das Sicherheitsglas kraft- und/oder formschlüssig mit dem ersten Grundkörper des ersten Halterahmens verbunden.

In einem weiteren Ausführungsbeispiel kann die Verbindung zwischen dem Sicherheitsglas und dem ersten Halterahmen stoffschlüssig hergestellt werden. Die Verbindung ist in einem typischen Ausführungsbeispiel derart ausgestaltet, dass der Frontscheibenschutz die Vorgaben der Baumusterprüfung für FOPS-Kabinenschutzaufbauten nach ISO 10262 erfüllt.

Der Dachschutz des Kabinenaufbaus weist einen weiteren Halterahmen zur Aufnahme des Schutzglases auf. In einem Ausführungsbeispiel weist der weitere Halterahmen des Dachschutzes einen weiteren Grundkörper und zumindest ein weiteres Halteelement auf. Der weitere Grundkörper weist eine Aufnahme für das Sicherheitsglas auf. Durch die weiteren Halteelemente sowie Befestigungselemente wird das Sicherheitsglas mit dem weiteren Grundkörper des weiteren Halterahmens des Dachschutzes kraft- und/oder formschlüssig verbunden.

In einem weiteren Ausführungsbeispiel wird die Verbindung zwischen dem weiteren Grundkörper des weiteren Haltelementes und dem Sicherheitsglas oder dem weiteren Halteelement und dem Sicherheitsglas stoffschlüssig hergestellt.

In typischen Ausführungsbeispielen erfüllt der Dachschutz ebenfalls die Anforderungen der Baumusterprüfung für FOPS-Kabinenschutzaufbauten nach ISO 10262.

Sowohl der erste Halterahmen des Frontscheibenschutzes, als auch der weitere Halterahmen des Dachschutzes weisen Verbindungselemente und/oder Aufnahmen für Verbindungselemente zur Festlegung an der Führerkabine auf.

In einem weiteren Ausführungsbeispiel weisen der erste Halterahmen und der weitere Halterahmen zudem weitere Verbindungselemente und/oder Verbindungspunkte auf, um den Frontscheibenschutz direkt mit dem Dachschutz zu verbinden und/oder um den Frontscheibenschutz mit dem Dachschutz und/oder der Führerkabine über Verstellelemente zu verbinden. Bei den Verstellelementen handelt es sich um Gasfedern. Hierbei besteht auch die Möglichkeit die Verbindung derart auszugestalten, dass der Frontscheibenschutz zumindest teilweise abklappbar ist und weiterhin vorzugsweise zumindest teilweise in den Dachschutz eingeschoben werden kann.

Weitere für den Fachmann nahliegende Ausführungsformen des Halterahmens sind durch die vorliegende Erfindung ebenfalls umfasst.

In einem weiteren Ausführungsbeispiel wird der Frontscheibenschutz über die Verbindungselemente direkt an der Führerkabine der Arbeitsmaschine befestigt.

Das Sicherheitsglas des Fronscheibenschutzes und/oder des Dachschutzes weist eine austauschbare Opferfolie auf. Durch die Opferfolie weist das Sicherheitsglas eine weitere Schutzschicht auf, die bei Beschädigungen, bspw. Kratzern durch herabfallende Schuttteile, ersetzt werden kann. Dadurch kann die Lebensdauer des Polycarbonatglases mit Siliziumoxidbeschichtung nochmals verlängert werden.

In einem weiteren Ausführungsbeispiel kann der Frontscheibenschutz als Nachrüstung für eine Führerkabine eingesetzt werden. Dabei weist der Frontscheibenschutz ebenfalls ein Sicherheitsglas aus Polycarbonatglas mit einer Siliziumoxidbeschichtung auf. Weiterhin weist das Sicherheitsglas einen ersten Halterahmen auf, der über Verbindungselemente an der Führerkabine der Arbeitsmaschine befestigbar ist.

Der erste Halterahmen weist eine Dichtlippe auf. Durch die Dichtlippe kann bei der Befestigung des ersten Halterahmens an der Führerkabine eine wetterfeste Abdichtung zwischen der Führerkabine der Arbeitsmaschine und dem ersten Halterahmen des Frontscheibenschutzes erstellt werden. Dadurch kann ein eindringen von Wasser, aber auch von Schmutzpartikeln verhindert oder zumindest auf ein sehr geringes Mass vermindert werden.

In einem weiteren Ausführungsbeispiel ist der Frontscheibenschutz auch zur Nachrüstung an einem bestehenden FOPS-Kabinenschutzaufbau geeignet. Dadurch kann bspw. ein defektes Kabinenschutzaufbauvorderteil aus Gitterelementen gegen den erfindungsgemässen Frontscheibenschutz ausgetauscht werden. Hierdurch kann auch an einem bereits installierten Kabinenschutzaufbau die Sicht des Maschinen bzw. Fahrzeugführers erheblich verbessert werden. Ebenso kann ein noch intaktes Kabinenschutzaufbauvorderteil aus Gitterelementen gegen den erfindungsgemässen Frontscheibenschutz ausgetauscht werden oder der Frontscheibenschutz kann an einem Führerhaus ohne Kabinenschutzaufbau nachgerüstet werden.

In einem weiteren Ausführungsbeispiel kann auch der Dachschutz für eine Nachrüstung für eine Führerkabine für eine Arbeitsmaschine genutzt werden. Der Dachschutz weist dabei ebenfalls ein Sicherheitsglas aus Polycarbonatglas mit Siliziumoxidbeschichtung auf. Das Sicherheitsglas weist zudem einen weiteren Halterahmen auf, der über Verbindungselemente an der Führerkabine befestigbar ist. Durch die Nachrüstung des Dachschutzes für eine Führerkabine kann die Sicht des Maschinen bzw. Fahrzeugführers ebenfalls stark verbessert werden. Dabei kann der erfindungsgemässe Dachschutz sowohl einen beschädigten Dachschutz als auch einen bestehenden Gitterdachschutz ersetzen oder auch an einer Kabine ohne Kabinenschutzaufbau nachgerüstet werden.

Weiterhin kann das Sicherheitsglas aus Polycarbonat mit der Siliziumoxidbeschichtung für die Erstellung eines Kabinenschutzes für eine Führerkabinen einer Arbeitsmaschine wie bspw. Baumaschinen, Landwirtschaftsmaschinen, Forstmaschinen oder Sprengstoffräummaschinen genutzt werden. Dadurch kann bspw. das Gewicht einer Führerkabine für eine Sprengstoffräummaschine deutlich gesenkt werden, da das Polykarbonat-Glas mit Siliziumoxid-Beschichtung zur Erreichung derselben Schutzwirkung eine geringere Dicke aufweisen muss, als herkömmliches Panzerglas.

Durch den Einsatz eines erfindungsgemässen Frontscheibenschutzes und Dachschutzes mit dem Sicherheitsglas aus Polycarbonat mit der Siliziumoxidbeschichtung kann auch das Gewicht eines herkömmlichen FOPS-Kabinenaufbauschutzes reduziert werden, da die schwere Gitterkonstruktion, die meist aus Stahl besteht, durch das dünnere hoch feste Polycarbonatglas mit Siliziumoxidbeschichtung ausgetauscht wird.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Figur 1: eine perspektivische Darstellung eines erfindungsgemässen Kabinenschutzaufbaus für eine Führerkabine;
- Figur 2: eine Vorderansicht eines Frontscheibenschutzes für den Kabinenschutzaufbau;
- Figur 3: eine Schnittdarstellung entlang der Linie III-III nach Figur 2;
- Figur 4: eine vergrösserte Darstellung des Ausschnitts X aus Figur 3;
- Figur 5: eine perspektivische Darstellung eines Dachschutzes für den Kabinenschutzaufbau;
- Figur 6: eine Unteransicht des Dachschutzes nach Figur 5; und
- Figur 7: eine vergrösserte Schnittdarstellung eines Aufnahmebereichs für ein Sicherheitsglas des Dachschutzes.

### Ausführungsbeispiel

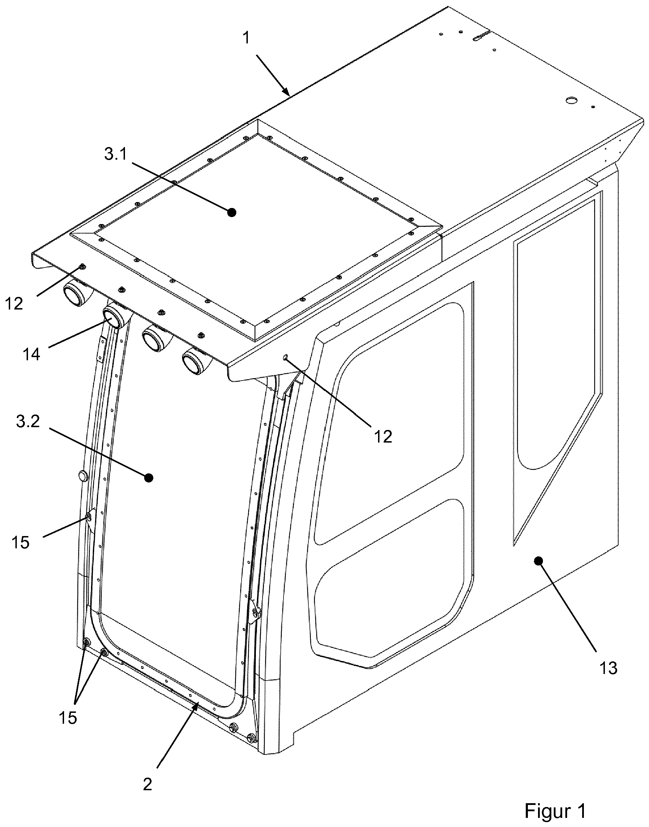

Figur 1 zeigt eine Führerkabine 13 einer Arbeitsmaschine mit einem Kabinenschutzaufbau. Durch den Kabinenschutzaufbau wird ein Fahrzeugführer der Arbeitsmaschine vor einem Eindringen von herabfallenden Gegenständen, bspw. Schuttteilen, geschützt. Der Kabinenschutzaufbau umfasst einen Frontscheibenschutz 2 und einen Dachschutz 1.

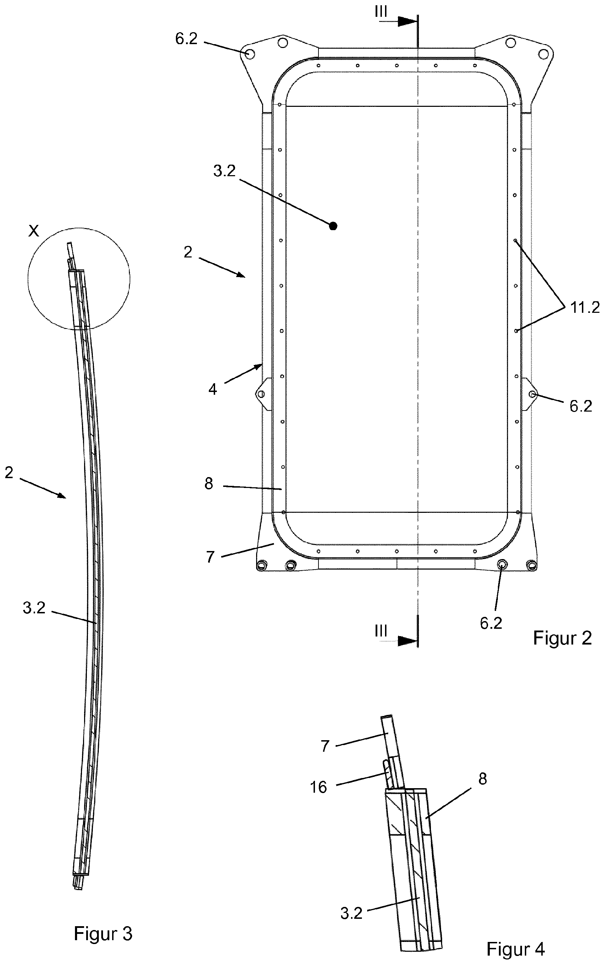

In den Figuren 2 und 3 ist der Frontscheibenschutz 2 des erfindungsgemässen Kabinenschutzaufbaus für die Führerkabine der Arbeitsmaschine dargestellt.

Der Frontscheibenschutz 2 umfasst ein Sicherheitsglas 3.2. Weiterhin weist der Frontscheibenschutz 2 einen ersten Halterahmen 4 auf. Durch den ersten Halterahmen 4 wird das Sicherheitsglas 3.2 in dem Frontscheibenschutz 2 aufgenommen.

Der in den Figuren 2 bis 4 dargestellte erste Halterahmen 4 umfasst ein erstes Grundelement 7 sowie ein erstes Halteelement 8. Das Sicherheitsglas 3.2 wird durch das erste Halteelement 8 mittels Befestigungselementen 11.2 in dem ersten Halterahmen 4 fixiert.

Weiterhin umfasst der erste Halterahmen 4 des Frontscheibenschutzes 2 Aufnahmen 6.2 für Verbindungselemente 15 (siehe Figur 1) zur Festlegung an der Führerkabine. In einem weiteren Ausführungsbeispiel weist der erste Halterahmen 4 die Verbindungselemente 15 zur Festlegung an der Führerkabine anstelle der Aufnahme 6.2 für Verbindungselemente 15 auf.

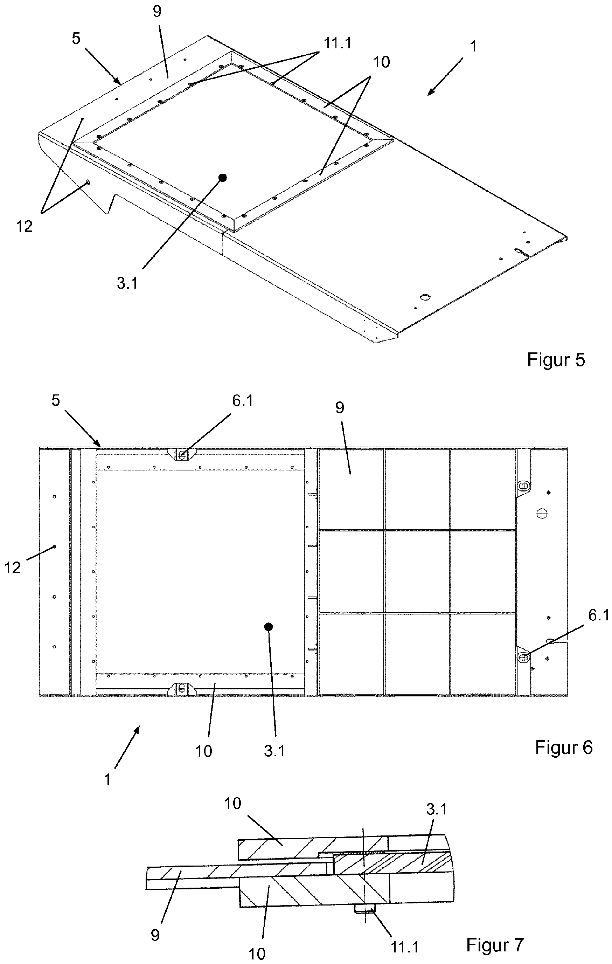

In den Figuren 5 und 6 ist der Dachschutz 1 für den Kabinenschutzaufbau für die Führerkabine der Arbeitsmaschine dargestellt. Der Dachschutz 1 des erfindungsgemässen Kabinenschutzaufbaus umfasst ein Sicherheitsglas 3.1. Weiterhin umfasst der Dachschutz 1 einen weiteren Halterahmen 5. In dem weiteren Halterahmen 5 ist das Schutzglas 3.1 aufgenommen.

Der Dachschutz 1 weist zur Festlegung an der Führerkabine Aufnahmen 6.1 für Verbindungselemente 15 auf. In einem weiteren nicht dargestellten Ausführungsbeispiel weist der weitere Halterahmen 5 des Dachschutzes 1 Verbindungselemente 15 zur Festlegung an der Führerkabine anstelle der Aufnahmen 6.1 für Verbindungselemente 15 auf.

In den Figuren 5 bis 7 ist dargestellt, dass das Sicherheitsglas 3.1 in einem weiteren Grundelement 9 des weitere Halterahmens 5 durch Halteelemente 10 sowie Befestigungselemente 11.1 festgelegt ist. Weiterhin weist der Dachschutz 1 in dem dargestellten Ausführungsbeispiel Verbindungspunkte 12 auf, die dazu geeignet sind, den Frontscheibenschutz 2 mit dem Dachschutz 1 zu verbinden und/oder den um den Frontscheibenschutz 2 mit dem Dachschutz 1 und/oder der Führerkabine 13 über Verstellelemente zu verbinden und/oder zur Anbringung von weiteren Aufbauten, wie bspw. Arbeitsscheinwerfern 14.

Der Frontscheibenschutz 2 ist weiterhin als eine Nachrüstung für eine Führerkabine 13 vorgesehen. In diesem Fall besteht der Frontscheibenschutz 2 ebenfalls aus einem Sicherheitsglas 3.2, wobei das Sicherheitsglas 3.2 einen ersten Halterahmen 4 aufweist. Der erste Halterahmen 4 ist, wie in bspw. in Figur 1 gezeigt, über Verbindungselemente 15 an der Führerkabine befestigbar.

Weiterhin weist der erste Halterahmen 4 eine Dichtlippe 16 auf, welche dazu geeignet ist, bei der Befestigung des ersten Halterahmens 4 an der Führerkabine 13 einer Arbeitsmaschine eine wetterfeste Abdichtung zwischen der Führerkabine 13 und dem ersten Halterahmen 4 zu erstellen. Durch die Dichtlippe 16 kann ein Eindringen von Wasser und/oder Schmutzpartikel zwischen die Frontscheibe der Führerkabine 13 und dem Frontscheibenschutz 2 verhindert werden.

Der Frontscheibenschutz 2 kann insbesondere als Nachrüstung in einem FOPS-Kabinenschutzaufbau genutzt werden, der Aufgrund von Beschädigungen durch herabfallende Gegenstände, bspw. Schutt oder Trümmerteile, beschädigt worden ist und daher ausgetauscht werden muss.

Der Dachschutz 1 kann ebenfalls als Nachrüstung für eine Führerkabine 13 für eine Arbeitsmaschine genutzt werden. In einem solchen Ausführungsbeispiel besteht der Dachschutz 1 ebenfalls aus einem Sicherheitsglas 3.1. Das Sicherheitsglas 3.1 weist ebenfalls einen weiteren Halterahmen 5 auf. Der Halterahmen 5 wird über Verbindungselemente 15 an der Führerkabine befestigt. Der Dachschutz 1 kann dabei ebenfalls als Nachrüstung für einen defekten Dachschutz eines bestehenden Kabinenschutzaufbaus genutzt werden, oder als Nachrüstung einer Führerkabine 13, die bis dorthin noch keinen Kabinenschutzaufbau aufgewiesen hat.

Bei dem genutzten Sicherheitsglas 3.1 und 3.2 handelt es sich um ein Polycarbonatglas mit einer Siliziumoxidbeschichtung. Das Polycarbonatglas mit der Siliziumoxidbeschichtung ist auch unter dem Namen "Hammerglas" bekannt.

Die Dicke des Sicherheitsglases 3.1 und 3.2 weist eine Stärke von 4 mm bis 20 mm auf. Weiterhin umfasst das Sicherheitsglas 3.1 und 3.2 eine austauschbare Opferfolie. Die austauschbare Opferfolie kann bei Beschädigungen und/oder zu starken Verschmutzungen einfach ausgetauscht werden. Dadurch kann die Lebensdauer des Sicherheitsglases 3.1 und 3.2 nochmals erhöht werden.

Weiterhin kann das Sicherheitsglas, das als Polycarbonatglas mit der Siliziumoxidbeschichtung ausgebildet ist, für die Erstellung eines Kabinenschutzes für eine Führerkabine 13 einer Arbeitsmaschine, wie bspw. Baumaschinen, Landwirtschaftsmaschinen, Forstmaschinen und/oder Sprengstoffräummaschinen verwendet werden.

**Bezugszeichenliste**

| | | | | | |
|---|---|---|---|---|---|
| 1 | Dachschutz | 34 | | | |
| 2 | Frontscheibenschutz | 35 | | | |
| 3 | Sicherheitsglas | 36 | | | |
| 4 | erster Halterahmen | 37 | | | |
| 5 | weiterer Halterahmen | 38 | | | |
| 6 | Aufnahme | 39 | | | |
| 7 | erstes Grundelement | 40 | | | |
| 8 | erstes Halteelement | 41 | | | |
| 9 | weiteres Grundelement | 42 | | | |
| 10 | weiteres Halteelement | 43 | | | |
| 11 | Befestigungselement | 44 | | | |
| 12 | Verbindungspunkt | 45 | | | |
| 13 | Führerkabine | 46 | | | |
| 14 | Arbeitsscheinwerfer | 47 | | | |
| 15 | Verbindungselement | 48 | | | |
| 16 | Dichtlippe | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Kabinenschutzaufbau für eine Führerkabine (13) einer Arbeitsmaschine, mit einem Dachschutz (1) und einem Frontscheibenschutz (2), wobei der Frontscheibenschutz (2) und der Dachschutz (1) ein Sicherheitsglas (3.1, 3.2) umfasst, der Frontscheibenschutz (2) einen ersten Halterahmen (4) aufweist, in welchem das Sicherheitsglas (3.2) aufgenommen ist und der Dachschutz (1) einen weiteren Halterahmen (5) aufweist, in welchem das Schutzglas (3.1) aufgenommen ist, wobei der erste Halterahmen (4) und der weitere Halterahmen (5) Verbindungselemente (15) und/oder Aufnahmen (6.1, 6.2) für Verbindungselemente zur Festlegung an der Führerkabine (13) aufweisen
**dadurch gekennzeichnet, dass**
das Sicherheitsglas (3.1, 3.2) ein Polycarbonatglas mit einer Siliziumoxidbeschichtung ist, wobei das Sicherheitsglas (3.1, 3.2) eine Dicke zwischen 4 mm und 20 mm aufweist, wobei das Sicherheitsglas (3.1, 3.2) eine austauschbare Opferfolie aufweist, wobei der erste Halterahmen (4) eine Dichtlippe (16) aufweist, welche dazu geeignet ist, bei der Befestigung des ersten Halterahmens (4) an der Führerkabine (13) einer Arbeitsmaschine eine wetterfeste Abdichtung zwischen der Führerkabine (13) und dem ersten Halterahmen (4) zu erstellen.

## Claims

1. A cab protection structure for a driver's cab (13) of work-performing machinery, with a roof protection means (1) and a windscreen protection means (2), wherein the windscreen protection means (2) and the roof protection means (1) comprise a safety glass (3.1, 3.2), the windscreen protection means (2) has a first holding frame (4) in which the safety glass (3.2) is accommodated and the roof protection means (1) has a further holding frame (5) in which the safety glass (3.1) is accommodated, wherein the first holding frame (4) and the further holding frame (5) have connecting elements (15) and/or receptacles (6.1, 6.2) for connecting elements for fixing on the driver's cab (13),
**characterised in that**
the safety glass (3.1, 3.2) is a polycarbonate glass with a silicon oxide coating, the safety glass (3.1, 3.2) having a thickness of between 4 mm and 20 mm, the safety glass (3.1, 3.2) having a replaceable sacrificial film, the first holding frame (4) having a sealing lip (16) which is suitable for creating a weatherproof seal between the driver's cab (13) and the first holding frame (4) upon fastening the first holding frame (4) to the driver's cab (13) of work-performing machinery.

## Revendications

1. Structure de protection pour une cabine de conducteur (13) d'une machine de travail, avec un protecteur de toit (1) et un protecteur de pare-brise (2), dans lequel le protecteur de pare-brise (2) et le protecteur de toit (1) comportent un verre de sécurité (3.1, 3.2), le protecteur de pare-brise (2) présente un premier châssis de retenue (4) dans lequel est reçu le verre de sécurité (3.2) et le protecteur de toit (1) présente un autre châssis de retenue (5) dans lequel est reçu le verre de sécurité (3.1), le premier châssis de retenue (4) et le deuxième châssis de retenue (4) présentant des éléments de connexion (15) et/ou des réceptacles (6.1, 6.2) pour les éléments de connexion destinés à la fixation à la cabine de conducteur (13),
**caractérisée par le fait que**
le verre de sécurité (3.1, 3.2) est un verre en polycarbonate avec un revêtement d'oxyde de silicium, le verre de sécurité (3.1, 3.2) présentant une épaisseur comprise entre 4 mm et 20 mm, le verre de sécurité (3.1, 3.2) étant un film de sacrifice remplaçable, le premier châssis de retenue (4) présentant une lèvre d'étanchéité (16) qui convient pour créer, lors de la fixation du premier châssis de retenue (4) à la cabine de conducteur (13) d'une machine de travail, une étanchéité résistant aux intempéries entre la cabine de conducteur (13) et le premier châssis de retenue (4).
